# EUROPEAN PATENT APPLICATION

(11) **EP 4 470 680 A1**
(43) Date of publication of application: **04.12.2024**
(21) Application number: 24176897.7
(22) Date of filing: 20.05.2024
(51) Int. Cl.: B05C 11/10

(54) **HOT MELT FEED SYSTEM**

(30) Priority: 22.05.2023 US 202363468214 P
(71) Applicant: Graco Minnesota Inc., Minneapolis, MN 55413-1894 (US)
(72) Inventor: FRIEDRICH, Adam R., Ham Lake, 55304 (US); McGONNELL, John A., Akron, 4430 (US)
(74) Representative: Lewis Silkin LLP

(57) **Abstract**

A hot melt system is configured to generate liquid adhesive from solid adhesive pellets. The liquid adhesive is applied to components, such as box tops, to fix components together. A melter is configured to melt the adhesive pellets into the liquid adhesive. Adhesive pellets are periodically fed from a hopper to the melter to maintain a constant supply of liquid adhesive. A adjustable flow restrictor is disposed upstream of venturi feed that displaces the adhesive pellets from the hopper to the melter. The adjustable flow restrictor is adjustable to change a flow of the compressed gas flow to the venturi feed. Adjusting the flow of the compressed gas flow adjusts the feed rate of the adhesive pellets from the hopper to the melter.

## Description

### CROSS-REFERENCE TO RELATED APPLICATION(S)

This application claims priority to U.S. Provisional App. No. 63/468,214, filed May 22, 2023, and entitled "HOT MELT FEED SYSTEM," the disclosure of which is hereby incorporated by reference in its entirety.

### BACKGROUND

The present disclosure relates generally to systems for dispensing hot melt adhesive. More particularly, the present disclosure relates to feed systems for feeding of adhesive pellets.

Hot melt dispensing systems are typically used in manufacturing assembly lines to automatically disperse an adhesive used in the construction of packaging materials such as boxes, cartons and the like. Hot melt dispensing systems conventionally comprise a material tank, heating elements, a pump and a dispenser. Solid adhesive pellets, such as formed from polymer, are melted in the tank using a heating element before being supplied to the dispenser by the pump. Because the melted pellets will re-solidify into solid form if permitted to cool, the melted pellets must be maintained at temperature from the tank to the dispenser. This typically requires placement of heating elements in the tank, the pump and the dispenser, as well as heating any tubing or hoses that connect those components. Furthermore, conventional hot melt dispensing systems typically utilize tanks having large volumes so that extended periods of dispensing can occur after the pellets contained therein are melted. However, the large volume of pellets within the tank requires a lengthy period of time to completely melt, which increases start-up times for the system. For example, a typical tank includes a plurality of heating elements lining the walls of a rectangular, gravity-fed tank such that melted pellets along the walls prevents the heating elements from efficiently melting pellets in the center of the container. The extended time required to melt the pellets in these tanks increases the likelihood of "charring" or darkening of the adhesive due to prolonged heat exposure.

### SUMMARY

According to an aspect of the present disclosure, a hot melt system includes a hopper configured to hold a supply of adhesive pellets; a melter configured to melt the adhesive pellets to form a liquid adhesive; a pump configured to pump the liquid adhesive from the melter; a venturi feed configured to draw the adhesive pellets from the hopper and drive the adhesive pellets to the melter; a feed line configured to provide compressed gas to the venturi feed to operate the venturi feed; and a adjustable flow restrictor disposed on the feed line upstream of the venturi feed, wherein the adjustable flow restrictor is configured to regulate flow of the compressed gas provided to the venturi feed, and wherein the adjustable flow restrictor is adjustable to change the flow.

According to an additional or alternative aspect of the present disclosure, a hot melt system includes a hopper configured to hold a supply of adhesive pellets; a melter configured to melt the adhesive pellets to form a liquid adhesive; a pump configured to pump the liquid adhesive from the melter; a vibrator connected to the hopper, the vibrator configured to vibrate the hopper to agitate the adhesive pellets; a venturi feed configured to draw the adhesive pellets from the hopper and drive the adhesive pellets to the melter; a feed line configured to provide compressed gas to the venturi feed to operate the venturi feed; a first feed valve actuatable between an open state and a closed state, the first feed valve disposed upstream of the venturi feed such that the first feed valve allows pneumatic flow to the venturi feed when in the open state and the first feed valve prevents pneumatic flow to the venturi feed when in the closed state; a adjustable flow restrictor disposed on the feed line upstream of the venturi feed, wherein the adjustable flow restrictor is configured to regulate a flow of the compressed gas provided to the venturi feed, and wherein the adjustable flow restrictor is adjustable to change the flow; and a controller configured to cause the first feed valve to open to cause the venturi feed to drive the adhesive pellets from the hopper to the melter and cause the first feed valve to close to prevent adhesive pellets from being carried to the melter from the hopper.

According to another additional or alternative aspect of the present disclosure, a method of feeding adhesive pellets within a hot melt system includes receiving, at a controller, a call for additional adhesive pellets to be fed to a melter, the melter configured to melt the adhesive pellets into a liquid adhesive; opening, by the controller, a first feed valve to allow compressed gas to flow downstream through a feed line to a venturi feed, the compressed gas through the venturi feed picking up the adhesive pellets from within a hopper and carrying the adhesive pellets to the melter; and regulating, by a adjustable flow restrictor, a flow of the pneumatic flow to the venturi feed, the adjustable flow restrictor disposed upstream of the venturi feed, the adjustable flow restrictor adjustable to change a flow of the compressed gas to the venturi feed.

### BRIEF DESCRIPTION OF THE DRAWINGS

FIG. 1 is a schematic block diagram of a hot melt system.
FIG. 2A is an isometric view of a hot melt system.
FIG. 2B is a second isometric view showing a portion of the hot melt system.
FIG. 3 is a partially exploded view of a portion of the hot melt system.
FIG. 4 shows a user interface of a hot melt system.
FIG. 5 is a schematic block diagram of a hot melt system.
FIG. 6 is a schematic block diagram of a hot melt system.

### DETAILED DESCRIPTION

This disclosure relates to adhesive application systems. More specifically, the present disclosure is directed to a hot melt system that provides at least one air source device for defining air flow for either or both of a pellet vibratory system and a venturi feed system. The pellet vibratory system assists in loosening adhesive pellets in the pellet hopper for feeding the pellets to the melter. The venturi feed system transports the pellets from the hopper to the melter. Aspects of the present disclosure allow for determining and setting the amount of compressed gas delivered to either or both the pellet vibratory and venturi feed systems.

Hot melt systems according to the disclosure include a adjustable flow restrictor that is disposed upstream of the venturi feed system. The adjustable flow restrictor is configured to set a flow of the compressed gas flow to and through the venturi feed to operate the venturi feed. The adjustable flow restrictor is adjustable such that the fluid parameters (e.g., flow and/or pressure) to the venturi feed can be changed. The flow restrictor can be adjusted (e.g., to increase or decrease flow) to change the flow rate of the adhesive pellets from the hopper to the melter. The adjustable flow restrictor can be actuated to increase gas flow to the venturi feed to increase the flow rate of the adhesive pellets to the melter. The adjustable flow restrictor can be actuated to decrease gas flow to the venturi feed to decrease the flow rate of the adhesive pellets to the melter.

Hot melt systems can additionally or alternatively include a controller that controls operation of one or more components of the hot melt system. The controller can be configured to control operation of a feed system of the hot melt system, the feed system configured to convey adhesive pellets from the hopper to the melter. The controller can operate the feed system by controlling flow of compressed gas to the feed system, such as by controlling one or more valves open and closed. In some examples, the controller can adjust the one or more valves to any desired position between opened and closed to set a desired fluid parameter.

The controller can monitor feeding of the adhesive pellets from the hopper to the melter. In some examples, the controller can be configured to determine an actual feed rate at which the adhesive pellets are fed to the melter. The controller can compare the actual feed rate to a target feed rate, which can be a range among other options, for the adhesive pellets and can determine whether the actual feed rate corresponds with or does not correspond with the target feed rate. The controller can output an adjust signal based on the controller determining that the actual feed rate does not correspond with the target feed rate. In some cases, the adjust signal can cause a user interface to provide an output to the user informing the user that the actual feed rate does not correspond with the target feed rate. The output to the user can include instructions to the user to adjust the adjustable flow restrictor to change the flow of compressed gas to the venturi feed, thereby changing the feed rate of the adhesive pellets. In some cases, the adjust signal can be provided to an actuator of the adjustable flow restrictor to cause the actuator to adjust the feed actuator to change the flow of the compressed gas to the venturi feed.

The controller can, in some additional or alternative examples, individually control operation of multiple components of the feed system. Some feed systems include a vibrator in addition to the venturi feed. The vibrator is configured to shake the hopper to agitate the adhesive pellets within the hopper. The vibrator can be controlled by the controller separate from the venturi feed. In some cases, the vibrator is pneumatically powered and the controller controls flow of compressed gas to the vibrator separate from the flow of compressed gas to the venturi feed. In some cases, the vibrator is electrically powered and the controller controls activation of the vibrator electrically while the venturi feed is pneumatic. Regardless of the power configuration of the vibrator, the controller can be configured such that the vibrator is activated prior to the compressed gas flow to the venturi feed. In such a configuration, the adhesive pellets begin to agitate prior to flow through the venturi feed that picks up the adhesive pellets to carry the adhesive pellets to the melter.

The controller can, in some additional or alternative examples, be configured to control a feed frequency at which the adhesive pellets are fed to the melter. The controller can, in some examples, adjust and/or set the feed frequency based on operating parameters of the hot melt system, such as based on the dispense rate of the liquid adhesive. In some examples, the controller can cause operation of the feed system more frequently and for less of a duration for each feed when the dispense rate is high and the controller can cause operation of the feed system less frequently and for greater of a duration with each feed when the dispense rate is low.

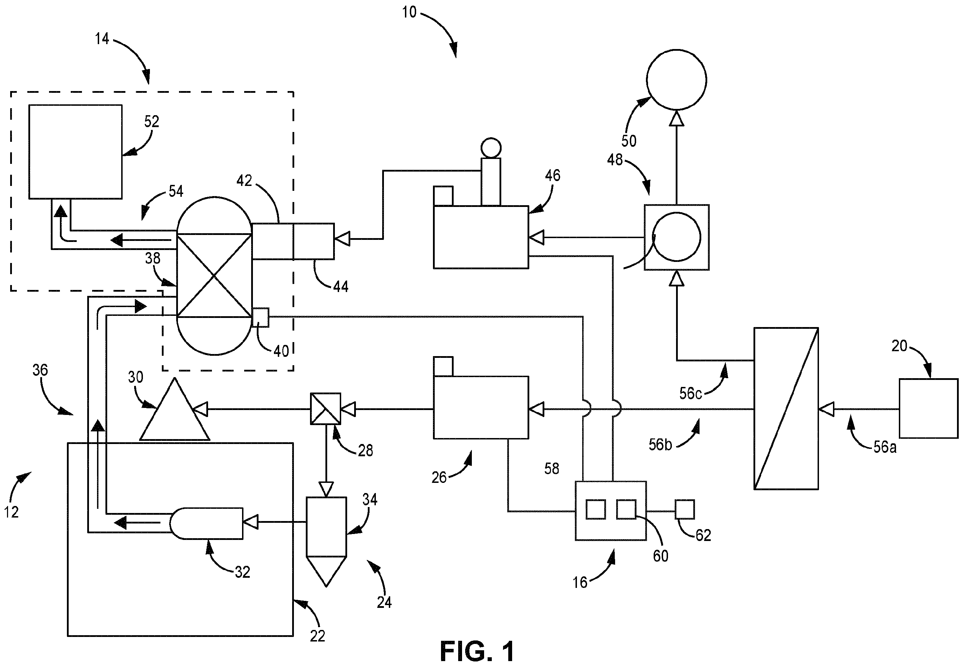

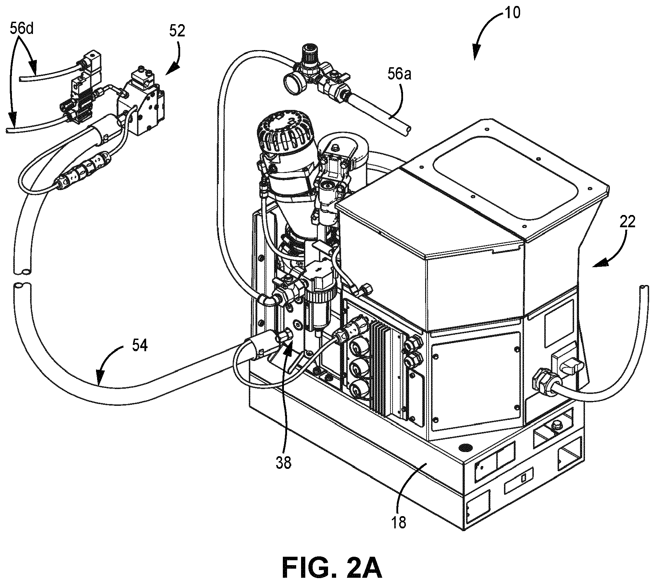

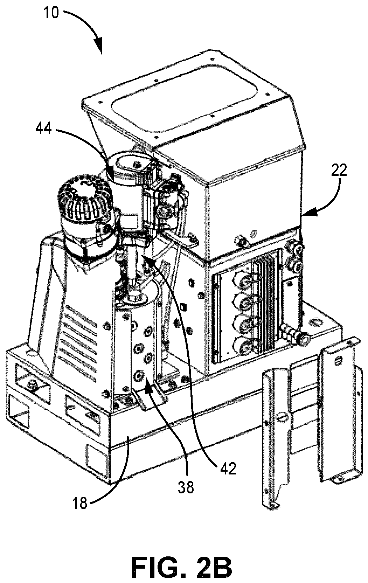

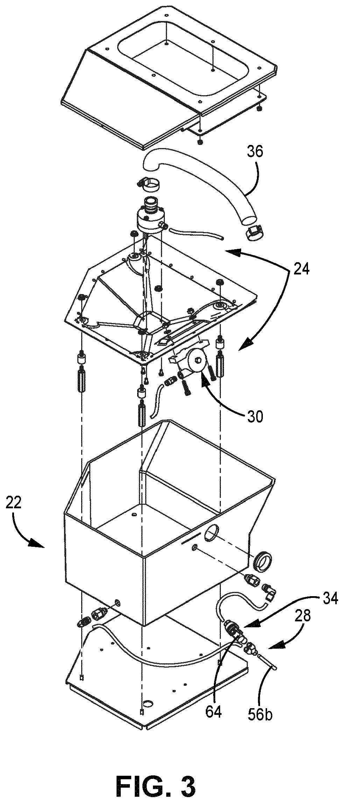

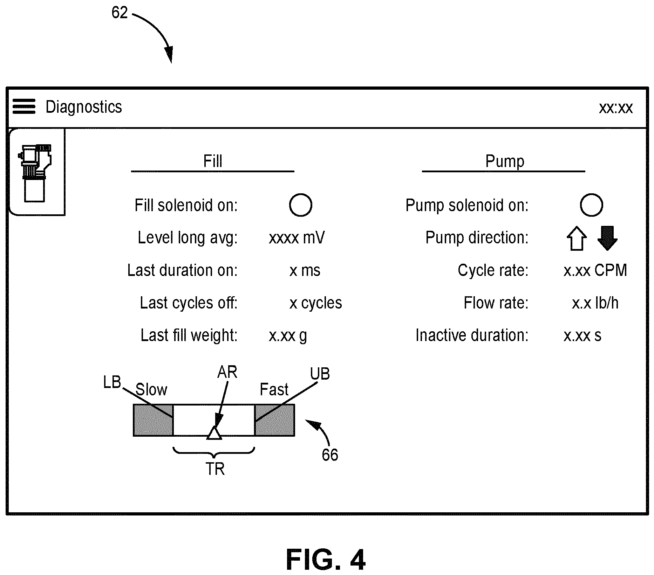

FIG. 1 is a schematic block diagram of a hot melt system 10. FIG. 2A is an isometric view of hot melt system 10. FIG. 2B is a second isometric view showing a portion of the hot melt system 10. FIG. 3 is a partially exploded view of a portion of hot melt system 10. FIG. 4 shows an example user interface 62. FIGS. 1-4 are discussed together. Hot melt system 10 includes cold section 12, hot section 14, frame 18, and controller 16. Cold section 12 includes hopper 22 and feed system 24. Feed system 24 includes feed valve 26, splitter 28, vibrator 30, venturi feed 32, adjustable flow restrictor 34a, and feed line 36. Hot section 14 includes melter 38, sensor 40, and pump 42. Motor 44, pump valve 46, regulator valve 48, gauge 50, applicator 52, and supply line 54 are also shown.

Hot melt system 10 is a system configured to melt adhesive pellets to form an adhesive liquid that is applied to surfaces, such as on boxes, to facilitate adhesion of parts. Hot melt system 10 is configured to thermally melt the adhesive pellets to form the liquid adhesive. Frame 18 supports various components of hot melt system 10. In the example shown, hot section 14 and cold section 12 are mounted on and supported by a common frame 18. It is understood that not all examples are so limited. For example, the hot section 14 and cold section 12 can be remote from each other and supported by separate frames. In other examples, components within one or both of the hot section 14 and cold section 12 can be dispersed such that the components are separately supported (e.g., a cold section hopper 22 and venturi feed 32 could be remote from the melter 38 for the hot section 14).

Gas source 20 is a source of compressed gas, such as an air compressor, one or more tanks of compressed gas, etc., that is configured to provide compressed gas to components of system 10 in both cold section 12 and hot section 14. The compressed gas is provided to hot melt system 10 through gas line 56a. The flow of compressed gas is selectively controlled from gas source 20 through gas line 56b to feed system 24 and through gas line 56c to motor 44 of pump 42. Gas line 56d connects gas source 20 to applicator 52. Gas lines 56a-56d can be formed as one or more hoses and/or pipes and/or tubes, among other options.

Controller 16 is connected in communication with various components of system 10, such as feed valve 26, feed system 24, melter 38, pump 42, and/or applicator 52, for controlling operation of hot melt system 10. Controller 16 is operatively connected to other components of hot melt system 10 to control operation of the other components of hot melt system 10. Controller 16 is operatively connected to feed system 24, electrically and/or communicatively, to control feed of adhesive pellets from hopper 22 to hot section 14. Controller 16 can be operatively connected to one or both of cold section 12 and hot section 14 to control operation of components in cold section 12 and/or hot section 14.

Controller 16 is operatively connected to feed system 24, electrically and/or communicatively, to control feeding of adhesive pellets to melter 38. In the example shown, controller 16 is operatively connected to feed valve 26 to control flow of compressed gas to feed system 24, such compressed gas operating one or more components of the feed system 24. In the example shown, controller 16 is operatively connected to feed valve 26 to open feed valve 26 and allow flow of compressed gas to vibrator 30 and venturi feed 32 to operate such components and to close feed valve 26 and stop operation of vibrator 30 and venturi feed 32. While controller 16 is shown as pneumatically controlling operation of vibrator 30 and venturi feed 32, it is understood that not all examples are so limited. For example, one or both of the vibrator 30 and a feed that drives adhesive pellets to the melter can be powered electrically, hydraulically, among other options. For example, controller 16 can be configured to electrically control operation of vibrator 30 and pneumatically control operation of venturi feed 32, such as by actuating feed valve 26.

Controller 16 is operatively connected to hot section 14, electrically and/or communicatively, to control formation and/or dispensing of the liquid adhesive. In the example shown, controller 16 is operatively connected to pump valve 46 to control flow of compressed gas to pump 42. For example, pump valve 46 can be a solenoid operated valve, among other options. The compressed gas can operate pump 42 to cause pump 42 to drive liquid adhesive from melter 38 to applicator 52. While pump 42 is shown as a pneumatically powered pump, it is understood that not all examples are so limited. For example, pump 42 can be electrically powered, such as by an electric motor, hydraulically operated, among other options. Regulator valve 48 is disposed upstream of pump valve 46. Regulator valve 48 is configured to regulate a pressure of the pneumatic flow to the pump valve 46 and thus to motor 44. Gauge 50 is fluidly connected to the pneumatic flow that powers pump 42 and can provide pressure information regarding that flow. The gauge 50 can provide pressure information regarding the regulated flow output from regulator valve 48.

Controller 16 can be operatively connected to applicator 52, electrically, pneumatically, hydraulically, or otherwise communicatively to cause applicator 52 to output the melted adhesive liquid.

Controller 16 is operatively connected to sensor 40, electrically and/or communicatively. In some examples, sensor 40 is configured as a level sensor. For example, sensor 40 can be configured to generate information regarding the level of adhesive in the melter 38. In some examples, the controller 16 can control operation of the feed system 24 based on information received from sensor 40. In some examples, sensor 40 is disposed adjacent the melter 38. In some examples, sensor 40 is configured to generate information regarding the amount of adhesive (e.g., liquid and/or pellets) in the cavity of the melter 38. For example, sensor 40 can be configured as an optical sensor or a sonar sensor, among other options. In other examples, sensor 40 can be disposed the pellet feed line 36 that feeds pellets from hopper 22 to melter 38. Feed line 36 can be formed as one or more hoses and/or pipes and/or tubes, a conveyor system, among other conveyance options. In some examples, hot melt system 10 can be configured with a pneumatically or electrically powered conveyor system for transporting the pellets from the hopper 22 to the melter 38. The controller 16 can manage the feed rate of such a system, such as by directly controlling operation of the pneumatic or electric components of the conveyor system. The sensor 40 can be configured to sense pellets passing through the feed tube.

Controller 16 is configured to store software, implement functionality, and/or process instructions. Controller 16 is configured to perform any of the functions discussed herein, including receiving an output from any sensor referenced herein, detecting any condition or event referenced herein, and controlling operation of any components referenced herein. Controller 16 can be of any suitable configuration for controlling operation of components of hot melt system 10, receiving signals from components of hot melt system 10, providing control signals to components of hot melt system 10, gathering data, processing data, etc. Controller 16 can include hardware, firmware, and/or stored software, and controller 16 can be entirely or partially mounted on one or more circuit boards. Controller 16 can be of any type suitable for operating in accordance with the techniques described herein.

Control circuitry 58, in one example, is configured to implement functionality and/or process instructions. For example, control circuitry 58 can be capable of processing instructions stored in memory 60. Examples of control circuitry 58 can include one or more of a processor, a microprocessor, a controller, a digital signal processor (DSP), an application specific integrated circuit (ASIC), a field-programmable gate array (FPGA), a graphics processing unit (GPU), a system-on-module (SOM), or other equivalent discrete or integrated logic circuitry. Control circuitry 58 can be entirely or partially mounted on one or more circuit boards.

Memory 60 can be configured to store information before, during, and/or after operation. Memory 60, in some examples, is described as computer-readable storage media. In some examples, a computer-readable storage medium can include a non-transitory medium. The term "non-transitory" can indicate that the storage medium is not embodied in a carrier wave or a propagated signal. In certain examples, a non-transitory storage medium can store data that can, over time, change (e.g., in RAM or cache). In some examples, memory 60 is a temporary memory, meaning that a primary purpose of memory 60 is not long-term storage. Memory 60, in some examples, is described as volatile memory, meaning that memory 60 does not maintain stored contents when power to controller 16 is turned off. Examples of volatile memories can include random access memories (RAM), dynamic random access memories (DRAM), static random access memories (SRAM), and other forms of volatile memories. In some examples, memory 60 is used to store program instructions for execution by control circuitry 58. Memory 60, in one example, is used by software or applications to temporarily store information during program execution.

Memory 60, in some examples, also includes one or more computer-readable storage media. Memory 60 can be configured to store larger amounts of information than volatile memory. Memory 60 can further be configured for long-term storage of information. In some examples, memory 60 includes non-volatile storage elements. Examples of such non-volatile storage elements can include magnetic hard discs, optical discs, flash memories, or forms of electrically programmable memories (EPROM) or electrically erasable and programmable (EEPROM) memories, among other options.

The memory 60 can store program instructions executable by the one or more processors for receiving information from, and delivering power to, any of the components referenced and/or shown herein to perform any of the functions referenced herein. For example, the control circuitry 58 can receive information from the sensor 40, such as information concerning a level of the liquid adhesive in melter 38. Based on information received from the sensor 40, the control circuitry 58 can regulate operation of feed system 24 to control feed of additional adhesive pellets to the melter 38

User interface 62 can include one or more input elements that facilitate communications between users and machines. For example, interface 62 can include one or more of a screen (e.g., touchscreen), buttons, dials, switches, and/or other input/output elements. While the interface 62 is shown as mounted to the hot melt system 10, it is understood that part or all of interface 62 may be remote from other components of hot melt system 10 and may communicate wirelessly, such as with controller 16. For example, a tablet touchscreen, smart phone, laptop may be used communicate via wired or wireless communications with control circuitry supported on the hot melt system 10, the tablet touchscreen, smart phone or laptop functioning for both inputting of commands and outputting of monitoring information, amongst other things. In some examples, user interface 62 can be formed by or as part of a programmable logic controller (PLC) that is utilized to operate or monitor hot melt system 10.

Components of cold section 12 can be operated at room temperature, without being heated. Hopper 22 is configured to contain a quantity of solid adhesive pellets for use by system 10. Suitable adhesives can include, for example, a thermoplastic polymer glue such as ethylene vinyl acetate (EVA) or metallocene, among other options. Feed system 24 connects hopper 22 to hot section 14 for delivering the solid adhesive pellets from hopper 22 to hot section 14.

Venturi feed 32 is positioned in hopper 22 in the example shown. Compressed gas from gas source 20 is delivered to venturi feed 32 to create low pressure that induces flow of solid adhesive pellets into the venturi feed 32 and then through feed line 36 to hot section 14. Feed line 36 is a tube or other passage sized with a diameter substantially larger than that of the solid adhesive pellets to allow the solid adhesive pellets to flow freely through feed line 36. Feed line 36 connects feed system 24 to hot section 14. Feed line 36 is configured to convey the solid adhesive pellets to the melter 38.

Vibrator 30 is configured to shake the hopper 22. The vibrator 30 shaking the hopper 22 can agitate the adhesive pellets within the hopper 22. Vibrating hopper 22 can assist in feeding of solid adhesive pellets from hopper 22 to venturi feed 32. Vibrator 30 can, in some examples, be considered to fluidize the adhesive pellets in hopper 22 to assist in flow to and through venturi feed 32. In some examples, vibrator 30 can be connected to hopper 22, such as on an exterior of hopper 22. In some examples, vibrator 30 can be integrated into the venturi feed 32. For example, vibrator 30 can include a weight (e.g., ball or other weighted implement) that is driven by the compressed gas to cause vibration. In some examples, vibrator 30 can be formed by compressed gas fed directly to the pellet bed, such as through fluid ports, the compressed gas flowing through the pellets to fluidize the pellet bed. In some examples, vibrator 30 can be pneumatically powered, such that provision of compressed gas causes vibrator 30 to vibrate hopper 22. While vibrator 30 can be pneumatically powered, it is understood that not all examples are so limited. For example, vibrator 30 can be electrically powered or hydraulically powered, among other options.

Solid adhesive pellets are delivered through feed line 36 to melter 38. Melter 38 includes a container and heating elements (e.g., resistive heating elements) for melting the solid adhesive pellets to form a hot melt adhesive in liquid form. Melter 38 can be sized to have a relatively small adhesive volume, for example about 0.5 liters, and configured to melt solid adhesive pellets in a relatively short period of time. The melter 38 can be fed with additional adhesive pellets during operation of hot melt system 10 to provide a continuous supply of liquid adhesive throughout operation.

Pump 42 is configured to pump the liquid adhesive from melter 38 to applicator 52. Pump 42 is driven by motor 44 to pump the hot melt adhesive from melt system 10, through supply line 54, to applicator 52. Motor 44 can be an air motor driven by compressed air from gas source 20, though it is understood that other configurations are possible. For example, motor 44 can be an electric motor, hydraulic motor, etc. Pump 42 can be a linear displacement pump, rotary pump, peristaltic pump, rotor-stator pump, or other type of pump suitable for displacing the liquid adhesive. Pump 42 is driven by motor 44.

Applicator 52 can be located remote from hot melt system 10. The applicator 52 is connected to melter 38 by supply line 54 to receive the liquid adhesive from supply line 54. Supply line 54 can be formed as one or more hoses and/or pipes and/or tubes, among other options. Supply line 54 can be a heated hose. Applicator 52 is configured to output the liquid adhesive. Hot melt adhesive from pump 42 is received by applicator 52 and dispensed from applicator 52. Applicator 52 can selectively discharge hot melt adhesive whereby the hot melt adhesive is sprayed out from an outlet of a module of the applicator 52 onto an object, such as a package, a case, or another object benefiting from hot melt adhesive dispensed by system 10. In some examples, applicator 52 can have a different configuration, such as a handheld gun-type dispenser. Some or all of the components in hot section 14, including melter 38, pump 42, supply line 54, and applicator 52, can be heated to keep the hot melt adhesive in a liquid state throughout hot section 14 during the dispensing process.

Controller 16 can cause dispensing of the liquid adhesive by activating pump 42 to provide liquid adhesive to applicator 52. In some examples, controller 16 can directly control operation of the applicator 52, such as by controlling a valve of the applicator 52, to control dispenses of the liquid adhesive. In some examples, the applicator 52 is pneumatically controlled. In the example shown, controller 16 can open the pump valve 46 to cause motor 44 to operate pump 42. In various other examples, controller 16 can cause electrical signals (e.g., power signals) to be provided to motor 44 to power motor 44, such as in examples in which motor 44 is an electric motor.

System 10 can be part of an industrial process, for example, for packaging and sealing cardboard packages and/or cases of packages. In alternative or additional examples, system 10 can be modified as necessary for a particular industrial process application. For example, pump 42 and/or hopper 22 can be separated from melter 38 and instead attached to a common frame.

In the example shown, gas line 56c is configured to provide compressed gas to components of feed system 24 to control operation of the components of feed system 24. Feed valve 26 is disposed on gas line 56c. Feed valve 26 is actuatable between and open state, in which compressed gas can flow downstream to operate feed system 24, and a closed state, in which the compressed gas is prevented from flowing to feed system 24. Feed valve 26 can be a solenoid-controlled valve, among other options. Feed valve 26 can be controlled between the open and closed states by the controller 16.

Splitter 28 is configured to divide flow of compressed gas to vibrator 30 and venturi feed 32. Splitter 28 can be configured as a bifurcation in the gas line 56c. Splitter 28 is disposed downstream of the feed valve 26 in the example shown, though it is understood that not all examples are so limited. The gas line 56c splits into first and second branch paths downstream of the splitter 28. The first branch path extends to the vibrator 30 to provide compressed gas to the vibrator 30. The second branch path extends to the venturi feed 32 to provide compressed gas to the venturi feed 32.

A first portion of the compressed gas for operating feed system 24 flows to vibrator 30 to operate vibrator 30. As discussed above, vibrator 30 vibrates the hopper 22 to agitate the adhesive pellets, enhancing flow to pick up by the venturi feed 32. A second portion of the compressed gas for operating feed system 24 flows to venturi feed 32. The compressed gas is configured to pick up adhesive pellets, such as due to the venturi feed 32 including a venturi that generates a low pressure or vacuum region that draws adhesive pellets into the air stream to be carried to the melter 38.

Adjustable flow restrictor 34 is disposed upstream of venturi feed 32. Adjustable flow restrictor 34 is configured to regulate the flow of the compressed gas (e.g., regulate pressure and thus flow rate) that flows to and operates venturi feed 32. Adjustable flow restrictor 34 is disposed downstream of splitter 28 in the example shown. It is understood, however, that in various other examples adjustable flow restrictor 34 can be disposed upstream of splitter 28. In some additional or alternative examples, a separate adjustable flow restrictor can be disposed to regulate the first portion of the compressed gas (e.g., regulate pressure of that gas) that flows to vibrator 30 to power vibrator 30.

While adjustable flow restrictor 34 is shown as disposed downstream of splitter 28, it is understood that not all examples are so limited. For example, adjustable flow restrictor 34 can be disposed upstream of splitter 28 to regulate gas flow to both vibrator 30 and venturi feed 32. In other examples, a first adjustable flow restrictor 34 can be disposed upstream of vibrator 30 and a second adjustable flow restrictor 34 can be disposed upstream of venturi feed 32. Some examples can thus include a first adjustable flow restrictor 34 operatively associated with the vibrator 30 to regulate flow to the vibrator 30 and a second adjustable flow restrictor 34 operatively associated with the venturi feed 32 to regulate flow to the venturi feed 32. The first adjustable flow restrictor 34 and second adjustable flow restrictor 34 can both be disposed downstream of the splitter 28, on separate branch paths. In such a configuration, the first adjustable flow restrictor 34 can control gas flow to vibrator 30 to control the vibrational frequency while the second adjustable flow restrictor 34 can control gas flow to venturi feed to control the feed rate. Controlling the strength of the vibration can be beneficial such as by utilizing weaker vibration with delicate or lighter adhesive pellets to avoid damage and utilizing stronger vibration with heavier or stickier adhesive pellets to provide efficient feed into venturi feed 32. In some examples, one of the first and second adjustable flow restrictors 34 can be disposed upstream of the splitter 28. For example, the first adjustable flow restrictor 34 can be disposed upstream of splitter 28 to limit gas flow to both venturi feed 32 and vibrator 30 while the second adjustable flow restrictor 34 can be disposed downstream of splitter 28 to further regulate gas flow to the venturi feed 32.

Adjustable flow restrictor 34 is adjustable to change flow of compressed gas downstream from the adjustable flow restrictor 34. In the example shown, the adjustable flow restrictor 34 is adjustable such that the flow of the second portion of the compressed gas through venturi feed 32 can be changed. The adjustment can increase or decrease the flow of the gas to venturi feed 32. Adjustable flow restrictor 34 allows for adjustment of the flow provided to venturi feed 32, facilitating adjustment for quicker or slower feed of adhesive pellets to the melter 38 from the feed system 24. As such, actuating the adjustable flow restrictor 34 to change the flow to venturi feed 32 can change the feed rate of the adhesive pellets to the melter 38.

Adjusting the operating flow of the venturi feed 32 by adjustable flow restrictor 34 can provide significant advantages. For example, if the gas flow to venturi feed 32 is too low, then the gas stream may not be able to pick up the adhesive pellets, particularly if there are heavier of stickier adhesive pellets. If the gas flow to venturi feed 32 is too high, then the gas flow can cause the adhesive pellets to impact and generate dust. Further, the high flow and resulting impact and harm the integrity of the adhesive pellets, which can result in a less efficient melt process for forming liquid adhesive and/or lower quality adhesive. Further, the compressed gas used to propel and convey the pellets from hopper 22 to the melter 38 is exhausted near the melter 38. Such compressed gas can pass through an exhaust filter to prevent adhesive pellet particulate from exhausting into the surrounding plant air. Controlling the gas pressure/flow reduces the pellet impacting/dust and thus reduces exhausted particulate and extends the service interval between filter cleaning, providing cost and efficiency savings. As the pellets approach and enter into the melter 38, excessive pellet dust and particulate can build up on the walls of the inlet funnel/section. This build up on the walls is exposed to heat over time from the melter 38 and eventually builds up, restricts the proper flow of pellets into melter 38, and requires service to clean. Controlling the gas pressure/flow to reduce dust and particulate formation reduces the required cleaning interval and works against such build up by reducing dust generation.

In some examples, adjustable flow restrictor 34 is configured as a manually-adjustable regulator. For example, adjustable flow restrictor 34 can include a knob 64 that can be manipulated by the user to adjust flow to the venturi feed 32. The knob 64 can be rotated in a first direction to increase flow to the venturi feed 32 and can be rotated in a second, opposite direction to decrease flow to the venturi feed 32. Adjusting the knob 64 can change the size of an opening through adjustable flow restrictor 34, thereby changing the gas flow downstream to venturi feed 32. The knob 64 can be rotated in the first direction to further open adjustable flow restrictor 34 allowing for additional gas flow and increasing the feed rate of adhesive pellets. The knob 64 can be rotated in the second direction to further close adjustable flow restrictor 34 reducing gas flow and decreasing the feed rate of the adhesive pellets.

In some examples, adjustable flow restrictor 34 can be electronically controlled, such as by controller 16. For example, controller 16 can set the opening of adjustable flow restrictor 34 and/or cause adjustable flow restrictor 34 to adjust further open (e.g., to allow more gas flow) or closed (e.g., to reduce gas flow) to adjust the gas flow provided to venturi feed 32. For example, controller 16 can cause an actuator of the adjustable flow restrictor 34 (e.g., an electric motor among other options) to adjust the adjustable flow restrictor 34 further open or closed to adjust the gas flow to venturi feed 32 and thereby adjust the feed rate of the adhesive pellets. In some examples, adjustable flow restrictor 34 can include a voltage to pressure (V/P) or current to pressure (I/P) valve. The controller 16 can cause actuation of the adjustable flow restrictor 34 further open or closed by provision of an analog voltage or current signal to adjustable flow restrictor 34.

During operation, the controller 16 can control operation of the feed system 24 to automatically feed additional adhesive pellets to melter 38, thereby maintaining a constant supply of liquid adhesive for dispensing by applicator 52.

Adhesive pellets are fed to melter 38 and melted by heating within melter 38 to form the liquid adhesive. Sensor 40 can generate information regarding the level of the adhesive within melter 38. The sensor 40 can provide the level information to controller 16. Controller 16 can control operation of the feed system 24 based on the level information. For example, controller 16 can cause the feed system 24 to operate to provide additional adhesive pellets to melter 38 based on the adhesive level in melter 38 falling below a lower level threshold. In such an example, controller 16 can activate feed system 24 based on the level information provided by the sensor 40 indicating that the adhesive level has fallen below the lower level threshold.

Controller 16 activates feed system 24 to fill adhesive pellets into the melter 38, such as based on the comparison of the lower level threshold and the adhesive level indicated by the level information. Controller 16 activates feed system 24 by opening feed valve 26. In the example shown, controller 16 can provide a valve open signal to feed valve 26 to cause the feed valve 26 to open to allow flow of compressed gas to feed system 24. For example, feed valve 26 can be formed as a solenoid-actuated valve.

With feed valve 26 open, the compressed gas flows downstream and is split at splitter 28. The first portion of the compressed gas flows to vibrator 30 to cause operation of vibrator 30. Vibrator 30 shakes the hopper 22 to agitate the adhesive pellets in the hopper 22. The second portion of the compressed gas flows to venturi feed 32 to cause operation of venturi feed 32. The second portion of compressed gas can flow through venturi feed 32 and pick up the adhesive pellets. The compressed gas can carry the adhesive pellets to melter 38. As discussed above, adjustable flow restrictor 34 sets the flow of compressed gas to venturi feed 32, which can thereby set the feed rate of the adhesive pellets to the melter 38.

Controller 16 can cause the feed system 24 to stop feeding adhesive pellets to the melter 38. For example, the controller 16 can cause the feed system 24 to stop feeding the adhesive pellets based on the level information provided by sensor 40. In some examples, the controller 16 can be configured to stop feed of the adhesive pellets based on the adhesive level in the melter 38 reaching an upper level threshold. In the example shown, controller 16 can stop feed of the adhesive pellets by causing the feed valve 26 to actuate closed. For example, controller 16 can cause feed valve 26 to close based on a valve close signal, which valve close signal can be a signal generated and provided to feed valve 26 or can be removal of the valve open signal, among other options. Closing feed valve 26 stops pneumatic flow to feed system 24, stopping operation of vibrator 30 and venturi feed 32.

In some examples, hot melt system 10 can be configured to dynamically fill adhesive pellets into melter 38. For example, controller 16 can be configured to manage filling of the adhesive pellets by adjusting the fill rate of the adhesive pellets to melter 38, adjusting the fill frequency (e.g., time between feed operations for filling of the adhesive pellets to melter 38), adjusting the lower and upper thresholds, etc. If the melter 38 is filled to slowly, then there is risk that the hot melt system 10 can run out of liquid adhesive. If the melter 38 is filled too quickly, then such fill may cause thermal shock to the liquid adhesive, affecting the quality of the liquid adhesive.

In some examples, controller 16 is configured to adjust the feed of the adhesive pellets into the melter 38 based on operating parameters of the hot melt system 10. For example, the controller 16 can be configured to adjust the feed frequency based on the dispense rate from the applicator 52. The dispense rate can be the user of applicator 52 over time, such as based on volume of liquid adhesive dispensed over time. In some examples, the controller 16 is configured to cause the feed system 24 to operate more often based on a greater dispense rate. In some additional or alternative examples, the controller 16 is configured to cause the feed system 24 to operate less often based on a lower dispense rate. In some examples, the controller 16 can be configured to adjust both the feed frequency and the feed duration based on operating parameters of the system. For example, the controller 16 can cause the feed system 24 to feed a smaller volume of adhesive pellets during each feed in conjunction with a greater fill frequency. As such, the controller 16 can decrease the feed duration of each feed while increasing the fill frequency of the feeds. In some additional or alternative examples, the controller 16 can cause the feed system 24 to feed a greater volume of adhesive pellets during each feed in conjunction with a lesser fill frequency. As such, the controller 16 can increase the feed duration of each feed while decreasing the fill frequency of the feeds. Feeding smaller volumes of the adhesive pellets into the melter 38 at a more frequent rate can avoid thermal shock to the liquid adhesive. Feeding larger volumes of the adhesive into the melter 38 at a less frequent rate can increase the efficiency of the fluidization of the adhesive pellets when dispensing at a slower dispense rate.

In some examples, the controller 16 can adjust the fill frequency by dynamically adjusting one or more of the level thresholds. For example, controller 16 can adjust one or both of the lower level threshold and the upper level threshold to decrease a range between the two, thereby causing more frequent filling of melter 38. In additional or alternative examples, controller 16 can adjust one or both of the lower level threshold and the upper level threshold to increase a range between the two, thereby causing less frequent filling of melter 38.

In some examples, the controller 16 can be configured to determine a target feed rate for feeding of the adhesive pellets into the melter 38. The target feed rate can be based on various operating parameters of the hot melt system 10, such as temperature, the low level threshold, the dispense rate, the type of adhesive pellet, etc. It is understood that the target feed rate can be a range between a lower range end and an upper range end.

Controller 16 can be configured to monitor an actual feed rate at which the adhesive pellets are fed to the melter 38. The controller 16 can determine whether the actual feed rate corresponds with the target feed rate or does not correspond with the target feed rate. For example, the actual feed rate can be considered to correspond with the target feed rate when the actual feed rate is between the upper and lower range ends of the feed range defining the target feed rate.

The controller 16 can determine an actual fill rate based on filling of the melter 38. In some examples, the controller 16 can count the time between initiating operation of feed system 24 and the adhesive level reaching the upper level threshold. In some examples, the controller 16 can determine the feed rate based on a count of air pulses required to transmit sufficient adhesive pellets for the adhesive level to reach the upper level threshold. In some examples, the sensor 40 can be configured to sense pellets traveling through feed line 36 and the controller 16 can determine the actual feed rate based on such information. In some examples, the feed rate can be determined based on level data generated by sensor 40. For example, sensor 40 can be a level sensor (e.g., an ultrasonic level sensor, among other options) configured to sense the amount of adhesive in melter 38 and the feed rate can be determined based on the changing adhesive level within melter 38.

Controller 16 can, in some examples, be configured to generate and provide an output to the user based on a comparison of the actual feed rate and the target feed rate. In some examples, the interface 62 can include an output 66 that provides information to the user. For example, the output 66 can be a visual display and/or an audible output. The output 66 can be configured to provide information regarding feed of adhesive pellets to melter 38 and/or information regarding dispenses of the liquid adhesive. In some examples, the output 66 can provide feed information that indicates the actual feed rate relative to the target feed rate. As shown in FIG. 4, the output 66 can be configured to provide a visual representation of the target feed rate TR and the actual feed rate AR. In the example shown, the target feed rate TR is a feed range between upper bound UB and lower bound LB.

In some examples, the controller 16 can generate and output an alarm based on the actual feed rate not matching with the target feed rate. For example, the controller 16 can be configured to generate and output the alarm based on the actual feed rate not corresponding with the target feed rate (e.g., by falling outside of the range defining the target feed rate).

The alarm can be provided to the user in any desired manner. For example, the controller 16 can cause the user interface 62 to output the alarm. The user interface 62 can provide the alarm in any desired manner, such as visually and/or audibly, among other options. The alarm can indicate to the user that the actual feed rate does not correspond with the target feed rate.

The adjustable flow restrictor 34 can be actuated in response to the alarm to alter the actual feed rate. For example, the adjustable flow restrictor 34 can be further opened to allow more gas flow and increase the feed rate or the adjustable flow restrictor 34 can be further closed to reduce gas flow and decrease the feed rate. In some examples, the controller 16 is configured to provide an adjustment command to the user in response to the controller 16 determining that the actual feed rate is outside of the target feed rate. For example, the adjustment command can provide instructions to the user on how to adjust the actual feed rate to correspond with the target feed rate. In some examples, the adjustment command can instruct the user to manipulate the adjustable flow restrictor 34, such as in examples in which adjustable flow restrictor 34 is manually operated, to adjust the actual feed rate. The adjustment command can instruct the user to adjust the adjustable flow restrictor 34 to increase or decrease flow, depending on the needs of the hot melt system 10.

Controller 16 can, in some examples, be configured to automatically adjust the feed rate based on the comparison of the actual feed rate and the target feed rate. For example, controller 16 can be operatively connected to adjustable flow restrictor 34, electrically and/or communicatively, and can be configured to cause adjustable flow restrictor 34 to adjust gas flow up or down, thereby adjusting the feed rate of the adhesive pellets. For example, the adjustment of the adjustable flow restrictor 34 can be automated by controller 16, such as a adjustable flow restrictor 34 used to control gas pressure with voltage to pressure (V/P) or current to pressure (I/P) device. In some examples, the controller 16 is configured to cause the adjustable flow restrictor 34 to open based further on the actual feed rate falling below the target feed rate to increase gas flow. In some examples, the controller 16 is configured to cause the adjustable flow restrictor 34 to further close based on the actual feed rate being above the target feed rate to decrease gas flow. In some examples, controller 16 can be configured to control the feed rate by a proportional integral derivative (PID) control algorithm.

Hot melt system 10 provides significant advantages. Adjustable flow restrictor 34 provides an adjustable flow control to venturi feed 32. Adjustable flow restrictor 34 facilitates adjustment of the feed rate of the adhesive pellets to the melter 38. The feed rate of the adhesive pellets to the melter 38 can be controlled based on operating conditions of the hot melt system 10. The adjustable flow restrictor 34 can be adjusted to increase or decrease the feed rate to achieve a target feed rate that is suited to the operating conditions and parameters of the hot melt system 10.

The feed frequency of the adhesive pellets to the melter 38 can be controlled based on operating conditions of the hot melt system 10. For example, controller 16 can be configured to adjust the frequency of filling of the adhesive pellets into the melter 38 based on the frequency of dispenses at applicator 52, maintaining quality adhesive liquid in sufficient quantities for operation. Controlling the feed frequency can provide a continuous supply of liquid adhesive while maintaining the melter 38 at preferred operating temperatures by avoiding feeds that could cause thermal shock or lead to over or under feeding.

Adjustable flow restrictor 34 allows the feed rate of the adhesive pellets to be adjusted. Inadequate air pressure and flow to transfer material or extended transfer time due to characteristics of the material. Excessive air pressure and flow for can cause high velocity, impact fracturing of pellets, exhausting of pellets/fragments/dust, cooling of molten glue in melter 38, over-filling the melter 38, etc.

In the example shown, adjustable flow restrictor 34 is disposed downstream of the splitter 28. The gas flow used to transfer pellets is often times feeding a shaker device (e.g., vibrator 30) in the hopper 22 as well to prevent bridging of the adhesive pellets. Too low of gas flow can render the vibrator 30 ineffective. Disposing adjustable flow restrictor 34 downstream of splitter 28 allows full flow to vibrator 30 for operating vibrator 30 while the gas flow to venturi feed 32 can be individually controlled separate from the vibrator 30. The adjustable flow restrictor 34 does not regulate flow of the gas flow to the vibrator 30 in the example shown.

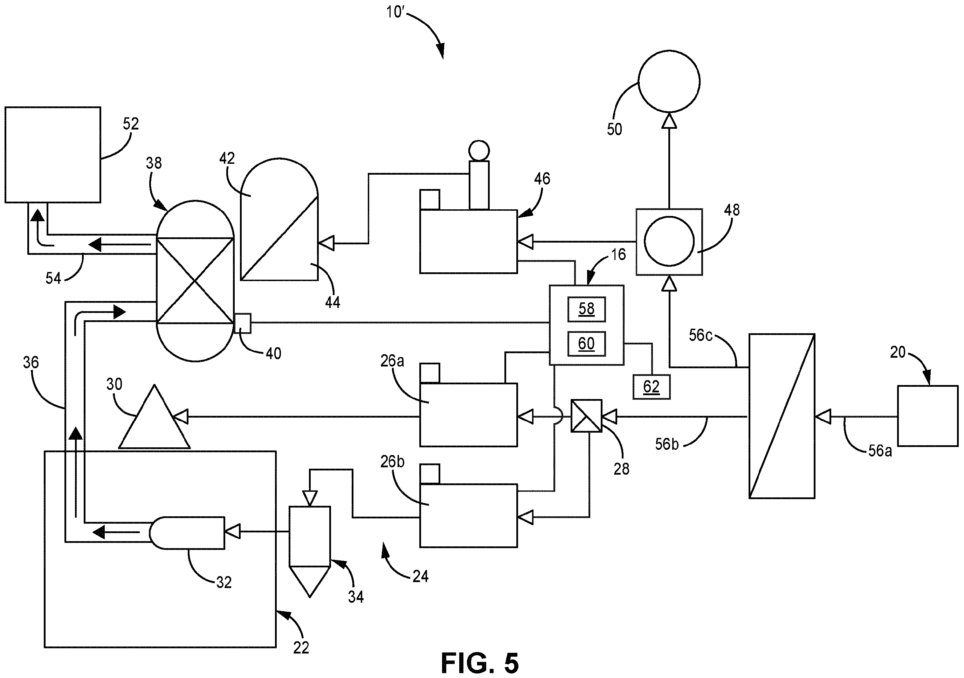

FIG. 5 is a schematic block diagram of hot melt system 10'. Hot melt system 10' is substantially similar to hot melt system 10 (best seen in FIGS. 1-2B), except hot melt system 10' includes feed valve 26a and feed valve 26b. In the example shown, controller 16 is configured to independently control operation of multiple components of feed system 24. In hot melt system 10, the second portion of the compressed gas is provided to both vibrator 30 and venturi feed 32 on opening of the feed valve 26. In hot melt system 10', feed valve 26a is operatively associated with vibrator 30 and feed valve 26b is operatively associated with venturi feed 32. Such a configuration allows for operation of one of vibrator 30 and venturi feed 32 while not operating the other one of vibrator 30 and venturi feed 32. Controller 16 can thus independently control operation of vibrator 30 and venturi feed 32.

Feed valve 26a and feed valve 26b are both disposed downstream of splitter 28 in the example shown. Feed valve 26a is operable between an open state, in which compressed gas can flow to vibrator 30 to operate vibrator 30, and a closed state, in which compressed gas is prevented from flowing to vibrator 30 and vibrator 30 is not operated. Feed valve 26b is operable between an open state, in which compressed gas can flow to venturi feed 32 to operate venturi feed 32, and a closed state, in which compressed gas is prevented from flowing to venturi feed 32 and venturi feed 32 is not operated. For example, one or both of feed valves 26a, 26b can be configured as a solenoid valve.

While both feed valve 26a and feed valve 26b are shown as disposed downstream of splitter 28, it is understood that not all examples are so limited. For example, feed valve 26a can be disposed upstream of splitter 28 and feed valve 26b can be disposed downstream of splitter 28 on the branch path of gas line 56b between splitter 28 and venturi feed 32. Configuring feed valves 26a, 26b in such a manner can ensure that vibrator 30 will operate whenever venturi feed 32 is operating. In other examples, feed valve 26b can be disposed upstream of splitter 28 and feed valve 26a can be disposed on the branch path of gas line 56b downstream of splitter 28 and between splitter 28 and vibrator 30. Configuring feed valves 26a, 26b in such a manner can ensure that venturi feed 32 will operate whenever vibrator 30 is operating. It is thus understood that controller 16 can be configured to control operation of one or both of vibrator 30 and venturi feed 32 separately from the other one of vibrator 30 and venturi feed 32.

Controller 16 can be configured to individually control operation of vibrator 30 and venturi feed 32. In the example shown, the controller 16 is operatively connected to feed valve 26a to control feed valve 26a between the respective open and closed states. Controller 16 is similarly operatively connected to feed valve 26b to control feed valve 26b between the respective open and closed states. Controller 16 can cause feed valve 26a to open to operate vibrator 30 while maintaining feed valve 26b closed to prevent operation of venturi feed 32. Controller 16 can similarly cause feed valve 26b to open to operate venturi feed 32 while maintaining feed valve 26a closed to prevent operation of vibrator 30.

During operation, controller 16 can be configured to sequence operation of vibrator 30 and venturi feed 32 to efficiently feed adhesive pellets to melter 38. For example, the controller 16 can cause the feed valve 26a to open prior to feed valve 26b in response to a call for additional adhesive pellets in melter 38. Opening feed valve 26a prior to opening feed valve 26b causes vibrator 30 to begin agitating the adhesive pellets prior to flow through the venturi feed 32 that picks up the adhesive pellets. Such a configuration can fluidize the pellet bed and/or place and maintain adhesive pellets in suspension prior to the venturi feed 32 operating to draw the pellets to the melter 38. Such a configuration can be considered to prime the adhesive pellets for pick up by the venturi feed 32. Priming the adhesive pellets can provide for more efficient pick up of the adhesive pellets on initiation of operation of the venturi feed 32.

Adjustable flow restrictor 34 is disposed downstream of feed valve 26b. With feed valve 26b open, the compressed gas flows downstream through adjustable flow restrictor 34 and then to venturi feed 32 to pick up adhesive pellets. Adjustable flow restrictor 34 is adjustable (e.g., manually by a user and/or automatically by controller 16) to adjust flow through the venturi feed 32, thereby controlling the feed rate of adhesive pellets to the melter 38.

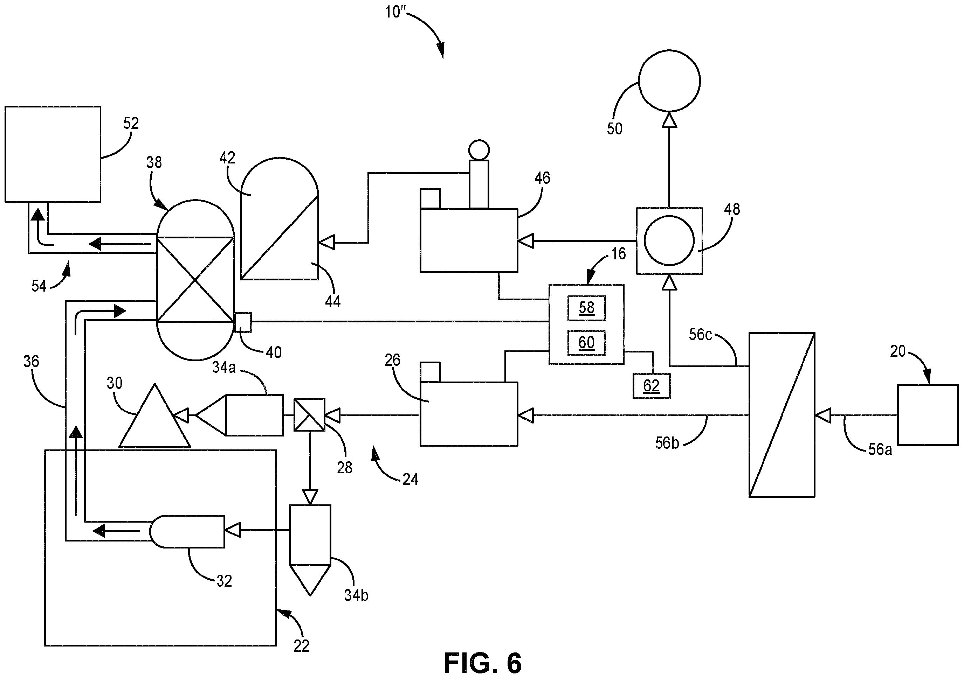

FIG. 6 is a schematic diagram of hot melt system 10", which is similar to hot melt system 10 (best seen in FIGS. 1-2B), except that hot melt system 10" includes adjustable flow restrictor 34a and adjustable flow restrictor 34b. In the example shown, multiple components of feed system 24 can be individually controlled. In hot melt system 10, the second portion of the compressed gas is provided to both vibrator 30 and venturi feed 32 on opening of the feed valve 26. The portion of the compressed gas that flows to vibrator 30 is at the system pressure at which the compressed gas enters into gas line 56b. In hot melt system 10", adjustable flow restrictor 34a is operatively associated with vibrator 30 and adjustable flow restrictor 34b is operatively associated with venturi feed 32. Such a configuration allows individual control for vibrator 30 and venturi feed 32. The power (e.g., pneumatic or electric) that operates venturi feed 32 (e.g., gas pressure for picking up adhesive pellets) can be adjusted to change the feed rate of the adhesive pellets to the melter 38. The power (e.g., pneumatic or electric) that operates vibrator 30 (e.g., gas pressure for inducing vibration or electrical power, among other options) can be adjusted to change the frequency and thus the intensity of the vibration caused by vibrator 30.

Adjustable flow restrictor 34a and adjustable flow restrictor 34b are both disposed downstream of splitter 28 in the example shown. Adjustable flow restrictor 34a is configured to regulate flow of the compressed gas to vibrator 30. Adjustable flow restrictor 34a can be adjustable such that the flow to vibrator 30 can be adjusted for higher or lower flow. Increasing flow to vibrator 30 can increase the intensity of the vibration caused by vibrator 30. Decreasing flow to vibrator 30 can decrease the intensity of the vibration caused by vibrator 30. Controlling the strength of the vibration can be beneficial, such as by utilizing weaker vibration with delicate or lighter adhesive pellets to avoid damage and utilizing stronger vibration with heavier or stickier adhesive pellets to provide efficient feed into venturi feed 32.

Feed valve 26b is configured to regulate flow of the compressed gas to venturi feed 32. Adjustable flow restrictor 34b can be adjustable such that the flow to venturi feed 32 can be adjusted for higher or lower flow. Increasing flow to venturi feed 32 can increase the feed rate of adhesive pellets to melter 38. Decreasing flow to venturi feed 32 can decrease the feed rate of adhesive pellets to melter 38. Controlling the feed rate can be beneficial, such as by ensuring pick up of heavier and/or stickier adhesive pellets, preventing impact that can generate dust or harm the integrity of the adhesive pellets, etc.

While both adjustable flow restrictor 34a and adjustable flow restrictor 34b are shown as disposed downstream of splitter 28, it is understood that not all examples are so limited. For example, adjustable flow restrictor 34a can be disposed upstream of splitter 28 and adjustable flow restrictor 34b can be disposed downstream of splitter 28 on the branch path of gas line 56b between splitter 28 and venturi feed 32. Configuring adjustable flow restrictors 34a, 34b in such a manner can limit flow to venturi feed 32 to the flow provided to vibrator 30. In other examples, adjustable flow restrictor 34b can be disposed upstream of splitter 28 and adjustable flow restrictor 34a can be disposed on the branch path of gas line 56b downstream of splitter 28 and between splitter 28 and vibrator 30.

In some examples, controller 16 can be configured to control operation of one or both of adjustable flow restrictors 34a, 34b to control the power that operates vibrator 30 and venturi feed 32. For example, controller 16 can be operatively connected, electrically and/or communicatively, to adjustable flow restrictor 34a such that controller 16 can cause adjustable flow restrictor 34a to adjust to change flow to vibrator 30. For example, controller 16 can cause adjustable flow restrictor 34a to open further to increase the intensity of the vibration caused by vibrator 30 or can cause adjustable flow restrictor 34a to close further to decrease the intensity of the vibration caused by vibrator 30. In additional or alternative examples, controller 16 can be operatively connected, electrically and/or communicatively, to adjustable flow restrictor 34b such that controller 16 can cause adjustable flow restrictor 34b to adjust to change flow to venturi feed 32. For example, controller 16 can cause adjustable flow restrictor 34b to open further to increase the feed rate of adhesive pellets or can cause adjustable flow restrictor 34b to close further to decrease the feed rate of adhesive pellets.

Controller 16 can be configured to individually control the power to vibrator 30 and venturi feed 32. In some examples, controller 16 can be configured such that controller 16 can adjust adjustable flow restrictor 34a independent of adjustable flow restrictor 34b and can adjust adjustable flow restrictor 34b independent of adjustable flow restrictor 34a.

### Discussion of Non-Exclusive Examples:

The following are non-exclusive descriptions of possible embodiments of the present invention.

A hot melt system includes a hopper configured to hold a supply of adhesive pellets; a melter configured to melt the adhesive pellets to form a liquid adhesive; a pump configured to pump the liquid adhesive from the melter; a venturi feed configured to draw the adhesive pellets from the hopper and drive the adhesive pellets to the melter; a feed line configured to provide compressed gas to the venturi feed to operate the venturi feed; and a adjustable flow restrictor disposed on the feed line upstream of the venturi feed, wherein the adjustable flow restrictor is configured to regulate a flow of the compressed gas provided to the venturi feed, and wherein the adjustable flow restrictor is adjustable to change the flow.

The hot melt system of the preceding paragraph can optionally include, additionally and/or alternatively, any one or more of the following features, configurations and/or additional components:
A vibrator configured to vibrate the hopper to agitate the adhesive pellets.

The vibrator is connected to the hopper.

The vibrator is fluidly connected to the feed line to receive the compressed gas from the feed line, and wherein the vibrator is pneumatically operated.

A splitter divides the feed line into a first branch path and a second branch path, the first branch path fluidly connected to the vibrator to provide a first portion of the compressed gas to the vibrator, and the second branch path fluidly connected to the venturi feed to provide a second portion of the compressed gas to the venturi feed.

A feed valve, the feed valve operable between an open state to allow the compressed gas to flow downstream through the feed valve and a closed state to prevent the compressed gas from flowing downstream through the feed valve. The feed valve is disposed upstream of the splitter.

The adjustable flow restrictor is disposed on the second branch path downstream of the splitter.

A first feed valve disposed on the first branch path and operable between a first open state and a first closed state; and a second feed valve disposed on the second branch path and operable between a second open state and a second closed state.

The adjustable flow restrictor is disposed downstream of the second feed valve.

A controller configured to cause the first feed valve to open prior to causing the second feed valve to open.

A controller operatively connected to the adjustable flow restrictor, the controller configured to control opening of the adjustable flow restrictor to control flow of compressed gas to the venturi feed.

A controller configured to determine a target feed rate for feeding the adhesive pellets to the melter; compare the target feed rate to an actual feed rate of the adhesive pellets; and generate and output an adjust signal based on the comparison indicating that the actual feed rate does not match the target feed rate, wherein the adjust signal is provided to a user interface to cause the user interface to output an indication regarding mismatch between the actual feed rate and the target feed rate.

The indication includes an instruction regarding adjustment of the adjustable flow restrictor.

The instruction includes adjusting the adjustable flow restrictor to increase flow through the venturi feed based on the comparison indicating that the actual feed rate is below the target feed rate.

The instruction includes adjusting the adjustable flow restrictor to decrease flow through the venturi feed based on the comparison indicating that the actual feed rate is above the target feed rate.

The target feed rate is a range between an upper range end and a lower range end.

A controller configured to: determine a target feed rate for feeding the adhesive pellets to the melter; compare the target feed rate to an actual feed rate of the adhesive pellets; and generate and output an adjust signal based on the comparison indicating that the actual feed rate does not match the target feed rate, wherein the adjust signal is provided to the adjustable flow restrictor to actuate the adjustable flow restrictor to adjust flow to the venturi feed.

A level sensor configured to generate level information regarding a level of adhesive in the melter; and a controller configured to: open a feed valve disposed upstream of the feed line to cause pneumatic flow to the venturi feed based on the level information indicating the level of adhesive reaching a lower level threshold; and close the feed valve to stop pneumatic flow to the venturi feed based on the level information indicating the level of adhesive reaching an upper level threshold.

A controller configured to: monitor a dispense rate at which adhesive is drawn from the melter; and adjust a feed frequency at which the adhesive pellets are fed from the hopper to the melter by the venturi feed based on the dispense rate.

The controller is configured to increase the feed frequency based on a relatively quicker dispense rate and the controller is configured to decrease the feed frequency based on a relatively slower dispense rate.

The controller is configured to increase the feed frequency and decrease a feed duration based on a relatively quicker dispense rate and the controller is configured to decrease the feed frequency and increase the feed duration based on a relatively slower dispense rate.

A hot melt system includes a hopper configured to hold a supply of adhesive pellets; a melter configured to melt the adhesive pellets to form a liquid adhesive; a pump configured to pump the liquid adhesive from the melter; a vibrator connected to the hopper, the vibrator configured to vibrate the hopper to agitate the adhesive pellets; a venturi feed configured to draw the adhesive pellets from the hopper and drive the adhesive pellets to the melter; a feed line configured to provide compressed gas to the venturi feed to operate the venturi feed; a first feed valve actuatable between an open state and a closed state, the first feed valve disposed upstream of the venturi feed such that the first feed valve allows pneumatic flow to the venturi feed when in the open state and the first feed valve prevents pneumatic flow to the venturi feed when in the closed state; a adjustable flow restrictor disposed on the feed line upstream of the venturi feed, wherein the adjustable flow restrictor is configured to regulate a flow of the compressed gas provided to the venturi feed, and wherein the adjustable flow restrictor is adjustable to change the flow; and a controller configured to: cause the first feed valve to open to cause the venturi feed to drive the adhesive pellets from the hopper to the melter; and cause the first feed valve to close to prevent adhesive pellets from being carried to the melter from the hopper.

The hot melt system of the preceding paragraph can optionally include, additionally and/or alternatively, any one or more of the following features, configurations and/or additional components:
The vibrator is fluidly connected to the feed line to receive compressed gas from the feed line, the vibrator pneumatically powered by the compressed gas.

The feed line includes a first branch path that extends to the vibrator and a second branch path that extends to the venturi feed; the adjustable flow restrictor is disposed on the first branch path; and a second feed valve is disposed on the feed line upstream of the vibrator, the second feed valve actuatable between a second open state and a second closed state.

The second feed valve is disposed on the second branch path.

The controller is configured to: cause the second feed valve to open prior to causing the first feed valve to open such that the vibrator is powered prior to the venturi feed.

A method of feeding adhesive pellets within a hot melt system includes receiving, at a controller, a call for additional adhesive pellets to be fed to a melter, the melter configured to melt the adhesive pellets into a liquid adhesive; opening, by the controller, a first feed valve to allow pneumatic flow downstream through a feed line to a venturi feed, the compressed gas through the venturi feed picking up the adhesive pellets from within a hopper and carrying the adhesive pellets to the melter; and regulating, by a adjustable flow restrictor, a flow of the pneumatic flow to the venturi feed, the adjustable flow restrictor disposed upstream of the venturi feed, the adjustable flow restrictor adjustable to change a flow of the compressed gas to the venturi feed.

The method of the preceding paragraph can optionally include, additionally and/or alternatively, any one or more of the following features, configurations and/or additional components:
Determining, by the controller, an actual feed rate of the adhesive pellets from the hopper to the melter; comparing, by the controller, the actual feed rate to a target feed rate; and outputting, by the controller, an adjust signal to a user interface based on the actual feed rate differing from the target feed rate, the adjust signal causing the user interface to output an indication that the actual feed rate does not match the target feed rate.

Outputting, by the controller, the adjust signal to the user interface based on the actual feed rate differing from the target feed rate, the adjust signal causing the user interface to output the indication that the actual feed rate does not match the target feed rate includes: outputting an instruction regarding adjustment of the adjustable flow restrictor, wherein: the instruction includes adjusting the adjustable flow restrictor to increase flow through the venturi feed based on the comparison indicating that the actual feed rate is below the target feed rate; and the instruction includes adjusting the adjustable flow restrictor to decrease flow through the venturi feed based on the comparison indicating that the actual feed rate is above the target feed rate.

Determining, by the controller, an actual feed rate of the adhesive pellets from the hopper to the melter; comparing, by the controller, the actual feed rate to a target feed rate; and actuating, by the controller, the adjustable flow restrictor to change the flow of the compressed gas to the venturi feed based on the actual feed rate differing from the target feed rate.

Actuating, by the controller, the adjustable flow restrictor to change the flow of the compressed gas to the venturi feed based on the actual feed rate differing from the target feed rate includes: adjusting the adjustable flow restrictor to increase flow through the venturi feed based on the comparison indicating that the actual feed rate is below the target feed rate; and adjusting the adjustable flow restrictor to decrease flow through the venturi feed based on the comparison indicating that the actual feed rate is above the target feed rate.

Opening, by the controller, a second feed valve to allow pneumatic flow downstream through a feed line to a vibrator, the pneumatic flow to the vibrator causing the vibrator to agitate the adhesive pellets in the hopper; wherein the controller opens the second feed valve prior to opening the first feed valve.

Activating, by the controller, a vibrator to cause agitation of the adhesive pellets in the hopper prior to opening, by the controller, the first feed valve.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A hot melt system comprising:
a hopper configured to hold a supply of adhesive pellets;
a melter configured to melt the adhesive pellets to form a liquid adhesive;
a pump configured to pump the liquid adhesive from the melter;
a venturi feed configured to draw the adhesive pellets from the hopper and drive the adhesive pellets to the melter;
a feed line configured to provide compressed gas to the venturi feed to operate the venturi feed; and
a feed regulator disposed on the feed line upstream of the venturi feed, wherein the feed regulator is configured to regulate a pressure of the compressed gas provided to the venturi feed, and wherein the feed regulator is adjustable to change the pressure.

2. The hot melt system of claim 1, further comprising:
a vibrator connected to the hopper, the vibrator configured to vibrate the hopper to agitate the adhesive pellets.

3. The hot melt system of claim 2, wherein the vibrator is fluidly connected to the feed line to receive the compressed gas from the feed line, and wherein the vibrator is pneumatically operated.

4. The hot melt system of claim 3, wherein a splitter divides the feed line into a first branch path and a second branch path, the first branch path fluidly connected to the vibrator to provide a first portion of the compressed gas to the vibrator, and the second branch path fluidly connected to the venturi feed to provide a second portion of the compressed gas to the venturi feed.

5. The hot melt system of claim 4, further comprising:
a feed valve, the feed valve operable between an open state to allow the compressed gas to flow downstream through the feed valve and a closed state to prevent the compressed gas from flowing downstream through the feed valve;
wherein the feed valve is disposed upstream of the splitter.

6. The hot melt system of claim any one of claims 4 and 5, wherein the feed regulator is disposed on the second branch path downstream of the splitter.

7. The hot melt system of claim 4, further comprising:
a first feed valve disposed on the first branch path and operable between a first open state and a first closed state; and
a second feed valve disposed on the second branch path and operable between a second open state and a second closed state.

8. The hot melt system of claim 7, wherein the feed regulator is disposed downstream of the second feed valve.

9. The hot melt system of any one of claims 1-8, further comprising:
a controller operatively connected to the feed regulator, the controller configured to control opening of the feed regulator to control flow of compressed gas to the venturi feed.

10. The hot melt system of any one of claims 1-8, further comprising:
a controller configured to:
determine a target feed rate for feeding the adhesive pellets to the melter;
compare the target feed rate to an actual feed rate of the adhesive pellets; and
generate and output an adjust signal based on the comparison indicating that the actual feed rate does not match the target feed rate, wherein the adjust signal is provided to a user interface to cause the user interface to output an indication regarding mismatch between the actual feed rate and the target feed rate.

11. The hot melt system of claim 11, wherein the indication includes an instruction regarding adjustment of the feed regulator.

12. The hot melt system of any one of claims 1-8, further comprising:
a controller configured to:
determine a target feed rate for feeding the adhesive pellets to the melter;
compare the target feed rate to an actual feed rate of the adhesive pellets; and
generate and output an adjust signal based on the comparison indicating that the actual feed rate does not match the target feed rate, wherein the adjust signal is provided to the feed regulator to actuate the feed regulator to adjust flow to the venturi feed.

13. The hot melt system of any one of claims 1-8, further comprising:
a level sensor configured to generate level information regarding a level of adhesive in the melter; and
a controller configured to:
open a feed valve disposed upstream of the feed line to cause pneumatic flow to the venturi feed based on the level information indicating the level of adhesive reaching a lower level threshold; and
close the feed valve to stop pneumatic flow to the venturi feed based on the level information indicating the level of adhesive reaching an upper level threshold.

14. The hot melt system of any one of claims 1-8, further comprising:
a controller configured to:
monitor a dispense rate at which adhesive is drawn from the melter; and
adjust a feed frequency at which the adhesive pellets are fed from the hopper to the melter by the venturi feed based on the dispense rate.

15. A method of feeding adhesive pellets within a hot melt system, the method comprising:
receiving, at a controller, a call for additional adhesive pellets to be fed to a melter, the melter configured to melt the adhesive pellets into a liquid adhesive;
opening, by the controller, a first feed valve to allow pneumatic flow downstream through a feed line to a venturi feed, the pneumatic flow through the venturi feed picking up the adhesive pellets from within a hopper and carrying the adhesive pellets to the melter; and
regulating, by a feed regulator, a pressure of the pneumatic flow to the venturi feed, the feed regulator disposed upstream of the venturi feed, the feed regulator adjustable to change a pressure of the pneumatic flow to the venturi feed.
